# EUROPEAN PATENT SPECIFICATION

(11) **EP 3 484 700 B1**
(45) Date of publication and mention of the grant of the patent: **23.09.2020**
(21) Application number: 17739709.8
(22) Date of filing: 23.05.2017
(51) Int. Cl.: B32B 5/02, E04F 13/16, E04F 13/00

(54) **MULTIFUNCTIONAL WALL COVERING**
MULTIFUNKTIONALE WANDABDECKUNG
REVÊTEMENT MURAL MULTIFONCTION

(30) Priority: 30.05.2016 NL 1041891
(43) Date of publication of application: 22.05.2019
(73) Proprietor: dQconcepts B.V., 2271 CA Voorburg (NL); Dutchcreen B.V., 4706 PH Roosendaal (NL)
(72) Inventor: NOSSBAUM, Frederik, 2271 CA Voorburg (NL)
(74) Representative: Haan, Raimond
(86) International application number: PCT/NL2017/000005
(87) International publication number: WO 2017/209600

(56) References cited:
- EP-A2- 1 919 701
- WO-A1-2010/070367
- US-A1- 2015 122 399

## Description

### Field of the invention

The present invention relates to a multifunctional wall covering, a method for manufacture thereof and a method for arranging thereof. The object of the invention is to provide a new wall covering system with which aesthetic properties can be combined in an efficient manner with additional functional properties in general, and more particularly with acoustic properties.

### Background of the invention

The term 'wall covering' is used below as collective term for coverings attached with an adhesive means in vertical or horizontal strips to walls or partitions of occupied spaces such as living spaces, work spaces and public spaces, with the main object of imparting a decorative appearance to the walls or partitions by means of, among other ways, designs arranged on the wall covering and by means of the texture of the material. Wall coverings were originally manufactured mainly from cellulose in the form of paper. Nowadays other organic and synthetic materials and combinations thereof are applied in addition to cellulose, optionally in a layered configuration and in different qualities, for instance as foam, woven and non-woven. Innovations to wall coverings relate to, among other aspects, measures relating to additional functional properties.

One of these properties relates to the acoustic properties. Acoustic properties determine the extent to which sound waves are absorbed instead of being reflected and transmitted. Multifunctional wall covering refers below in a general sense to wall covering with embodiments of explicit measures for one or more functions in addition to the primary aesthetic function, and more particularly to the sound-absorbing or, in other words, acoustic function.

Summarized in US 20150122399 are the advantages and disadvantages of diverse types of acoustic wall covering. Said document discloses an acoustic wall covering with improved sound-absorbing properties intended to increase comfort. The claimed improved properties are embodied by a wall covering with a layered configuration with an overall thickness of 3.5 to 6 mm. The materials applied are further specified in the document. The measures are explicitly intended to prevent painting of the wall covering, before or after it has been arranged on the wall or partition, resulting in a drastic decrease in the acoustic properties as a result of the decrease in the air-permeability of the top layer facing toward the room. The top layer is provided for this purpose with a glass textile with further specified properties,

Apart from the additional functional properties, there is also a growing demand for more aesthetic as well as unique wall finishes in living, work and public spaces. One of the aesthetic features relates to the finishing of the seams between abutting strips of wall covering. This applies, among other cases, when the design on the respective strips of wall covering must represent a connected whole, such as for instance in the case of photographic images. The use of bright, contrasting colours to produce designs results in higher standards being required for finishing of seams, since seams become more clearly visible in this situation.

In the use of layered types of wall covering, such as of the above stated type with advantageous acoustic properties, it is practically impossible to realize an apparently seamless finish because the porous, sound-absorbing materials applied are not dimensionally stable and consequently vary in thickness. A known method for obviating this problem is to attach the layers with the distinct functions, such as sound-absorbing and decorative respectively, in two successive operations to the wall or partition. An example of such a method is disclosed in WO 2010070367. A drawback of this method is that it is relatively laborious,

EP 1 919 701 B1 discloses several methods and materials for use in building construction applying, e.g. a building element in the form of a wall element that may require an air and water barrier, and a water vapor permeability along with thermal or acoustic insulation.

The object of the present invention is to provide a new wall covering system with which aesthetic properties can be combined in an efficient manner with additional functional properties in general, and more particularly with acoustic properties.

### Summary of the invention

The invention provides for this purpose a multifunctional wall covering, a method for manufacture thereof and a method for arranging thereof on a wall or a partition. The wall covering according to the invention comprises a strip of material which is longer than it is wide for attachment to wall or partition, with at least a first layer and a second layer connected to the first layer, which first layer consists of a porous, sound-absorbing textile material, and which second layer consists of an air-permeable textile material and which second layer is provided with a design, which strip of material is at least 2.2 m wide, at least 1.5 mm thick and a maximum of 10 mm thick. A type of wall covering with such properties creates possibilities for providing one or more walls or partitions of an occupied space of a standard height in an advantageous manner with a wall covering with high-quality aesthetic properties and with acoustic properties perceived as pleasant.

The first layer of the wall covering type according to the invention is manufactured from a known, relatively expensive and durable textile material such as a non-woven textile material with acoustic properties, a textile material on the basis of polypropylene or low-density polyethylene, a woven or thermally bonded non-woven textile of polypropylene or a foam material with acoustic properties such as polyurethane. An additional functional property is obtained with an exemplary embodiment of the wall covering of the present type wherein the first layer is characterized by a treatment with a flame-retardant substance.

One of the embodiments of the wall covering type according to the invention is characterized in that the first layer is provided with an adhesive layer for attaching the wall covering to wall or partition, which adhesive layer is provided with a protective sheet. Such an embodiment is advantageous in those situations wherein it is useful to minimize the work time necessary for arranging the wall covering.

The wall covering according to the invention is further characterized in that the second layer is manufactured from a printable textile material such as a woven textile on 1 00% polyester basis. The application of material types with such properties opens up possibilities for the use of state-of-the-art printing techniques for arranging aesthetically high-quality and unique designs on the wall covering. The invention also provides an embodiment wherein the second layer is provided with a design produced by a large-format printer or printing system. When the design comprises figurative elements, these are oriented spatially according to the invention in relation to a long side of the wall covering.

An additional functional property is obtained with an exemplary embodiment of the wall covering of the present type wherein the second layer is characterized by a treatment with a flame-retardant substance or wherein the first layer and the second layer are mutually connected with a glue layer with flame-retardant properties.

One of the embodiments of the wall covering type according to the invention is characterized in that the wall covering comprises a third layer which is located between the first and the second layer and which is connected thereto and which is manufactured from a non-woven polypropylene textile fabric with a density of 20-100 gf/m². The extra layer between the first and second layers contributes toward evening out possible irregularities on the surface of the first layer, and thereby enhances the aesthetic value of the wall covering.

The method for manufacturing the wall covering according to the present invention comprises of providing a strip of material of the above specified type with a design using a known large-format printer or similar large-format printing system. Providing the acoustic wall covering with a design in such a way is relatively advantageous, aesthetically and qualitatively high-grade and provides possibilities for arranging the wall covering in a cost-effective manner on a wall or partition.

According to an exemplary embodiment of the invention, the method comprises of winding the strip of material provided with a design by the large-format printing technique onto a roll, wherein the side provided with a design is oriented inward and wherein it is possible to preselect whether the strip of material, given the preferred orientation of the design, is rolled up from left to right or vice versa. This feature takes account of the wish to arrange a wall covering of the present type as desired from right to left or the other way round.

According to another exemplary embodiment of the invention, the method makes provision that the strip of material, after being provided with a design and before being wound onto a roll, is folded at least once in the longitudinal direction. The height of the roll of wall covering is reduced by this operation, whereby arranging of a strip on a wall or partition is made easier.

The method for arranging a strip of the wall covering of the above specified type is characterized in that a wall or partition with a height smaller than or the same as the width of the wall covering is covered seamlessly by the wall covering, whereby an aesthetically high-quality wall covering is realized.

The arranging method is further characterized by unwinding the wall covering in rolled-up state along the wall or partition, wherein the roll of wall covering is placed rotatably about an axis of rotation on a mobile platform which is moved for this purpose on the floor along the wall or partition. Such a method facilitates arranging of the wall covering. The method further makes provision that the direction of unrolling of the roll of wall covering, given the preferred orientation of the design, is adapted to the operating direction during arranging of the wall covering.

In order to facilitate arranging of the wall covering according to the invention, a particular aspect of the method makes provision for arranging on the wall or partition a layer provided with hook and loop fastenings for releasable attachment of the wall covering. Another aspect of the method comprises of arranging the wall covering on the wall or partition by making use of the adhesive layer with which the first layer of the wall covering is provided.

### Exemplary embodiments and methods according to the invention

In the simplest embodiment the multifunctional wall covering consists, with the emphasis here on acoustic and aesthetic functions, of a strip which is longer than it is wide and which is assembled from two layers of textile material. The first layer, which is brought into contact with the wall or partition during arranging of the wall covering, is manufactured from a known woven, non-woven or foam material with proven positive acoustic properties. Examples of such materials are textile material on the basis of polypropylene or low-density polyethylene, a woven or thermally bonded non-woven textile of polypropylene and a foam material with acoustic properties, such as polyurethane. The thickness of this first layer measures 1,5 to 10 mm, depending on, among other factors, the desired acoustic properties. In addition to absorbing sounds in the occupied space, the first layer serves to level out surface unevenness of the wall or partition.

The second layer connected to the first layer has printability as most important property. An example of such a textile material is a woven textile on 1 00% polyester basis. The second layer is air-permeable in order to facilitate the sound-absorbing properties of the first layer.

In a second exemplary embodiment the multifunctional wall covering according to the invention is assembled from three mutually connected layers. The third layer, which lies between the above stated first and second layers, serves substantially to mask surface unevenness of the first layer, whereby the wall covering acquires a smoother appearance. For the purpose of additional functions the respective layers of the wall covering according to the invention can have undergone a flame-retardant treatment. With the same purpose flame-retardant adhesives can be applied to mutually connect the respective layers.

The second layer can also be provided, on the basis of an additional treatment, with a dirt-repellent layer.

For seamless covering of a wall or partition of an occupied space with a standard height, the width of a strip of wall covering according to the invention is a minimum of 2.20 m, and in principle suitable for printing with a large-format printing system. The length of a strip of wall covering is preferably at least equal to the width of standard occupied spaces so that a wall or partition can be seamlessly covered. In order to arrange wall covering in one horizontal width on the wall or partition, according to the invention designs with figurative elements are spatially oriented relative to a long side,

The method for manufacturing the multifunctional wall covering preferably comprises of arranging a design on the strip of two or more layers by means of a known large-format printing system, A strip of limited length of the wall covering provided with a design is rolled up as desired from left to right or vice versa. The optimal direction depends on the preferred direction during covering of a wall or partition. In order to facilitate arranging of a strip of wall covering which is wider than the height of the occupied space the strip of wall covering, after being provided with a design, can be rolled up with one or more folds.

For arranging the wall covering according to invention it is efficient to make use of a tool, which is not further specified here and which comprises a mobile platform on which a roll of wall covering is placed for rotation around a shaft and with which the roll is unrolled along the wall or partition to be covered.

The arranging of the wall covering on a wall or partition preferably takes place in some situations by making use of a glue which is applied to the wall or partition. In a particular embodiment the first layer is provided with an adhesive layer with a protective sheet. For special situations the invention makes provision for arranging on the wall or partition a layer or a strip with hook and loop fastenings with which the woven or non-woven first layer can be attached, temporarily or otherwise, to the wall.

## Claims

1. Multifunctional wall covering arrangeable on a wall or a partition, comprising a strip of material which is longer than it is wide for attachment to said wall or partition, with at least a first layer and a second layer connected to the first layer, which first layer consists of a porous, sound-absorbing textile material, and which second layer consists of an air-permeable textile material and which second layer is provided with a design, **characterized in that** said strip of material is at least 2.2 m wide, at least 1.5 mm thick and a maximum of 10 mm thick.

2. Multifunctional wall covering as claimed in claim 1, **characterized in that** the first layer is manufactured from a non-woven textile material with acoustic properties, such as a textile material on the basis of polypropylene or low-density polyethylene.

3. Multifunctional wall covering as claimed in claim 1, **characterized in that** the first layer is manufactured from a woven or non-woven textile material with acoustic properties, such as a woven or thermally bonded non-woven textile of polypropylene.

4. Multifunctional wall covering as claimed in claim 1, **characterized in that** the first layer is manufactured from a foam material with acoustic properties such as polyurethane.

5. Multifunctional wall covering as claimed in any of the claims 1-4, **characterized in that** the first layer is manufactured from a textile with flame-retardant properties due to a treatment with a flame-retardant substance.

6. Multifunctional wall covering as claimed in any of the claims 1-5, **characterized in that** the first layer is provided with an adhesive layer for attaching the wall covering to wall or partition, which adhesive layer is provided with a protective sheet.

7. Multifunctional wall covering as claimed in any of the claims 1-6, **characterized in that** the second layer is manufactured from a printable textile material such as a woven textile on 100% polyester basis.

8. Multifunctional wall covering as claimed in claim 1, **characterized in that** the second layer is provided with a design produced by a large-format printer or printing system,

9. Multifunctional wall covering as claimed in any of the claims 1-8, **characterized in that** the second layer is manufactured from a textile with flame-retardant properties due to a treatment with a flame-retardant substance.

10. Multifunctional wall covering as claimed in claim 1, **characterized in that** the design comprises figurative elements which are oriented spatially in relation to a long side.

11. Multifunctional wall covering as claimed in any of the claims 1-10, **characterized in that** the first layer and the second layer are mutually connected with a glue layer with flame-retardant properties.

12. Multifunctional wall covering as claimed in any of the claims 1-10, **characterized in that** the wall covering comprises a third layer which is located between the first and the second layer and which is connected thereto and which is manufactured from a non-woven polypropylene textile fabric with a density of 20-100 gf/m².

13. Method for manufacturing a multifunctional wall covering of the type as claimed in any of the claims 1-12, **characterized in that** the method comprises of providing the strip of material with a design using a known large-format printer or a similar large-format printing system.

14. Method as claimed in claim 13, **characterized in that** the method comprises of winding the strip of material provided with a design by the large-format printing technique onto a roll, wherein the side provided with a design is oriented inward and wherein it is possible to preselect whether the strip of material, given the preferred orientation of the design, is rolled up from left to right or vice versa.

15. Method as claimed in claim 13 or 14, **characterized in that** the method makes provision that the strip of material, after being provided with a design and before being wound onto a roll, is folded at least once in the longitudinal direction,

16. Method for arranging a multifunctional wall covering of the type as claimed in any of the claims 1-12 on a wall or partition, **characterized in that** a wall or partition with a height smaller than or the same as the width of the wall covering is covered seamlessly by the wall covering.

17. Method as claimed in claim 16, **characterized in that** the method comprises of unwinding the wall covering in rolled-up state along the wall or partition, wherein the roll of wall covering is placed rotatably about an axis of rotation on a mobile platform which is moved for this purpose on the floor along the wall or partition,

18. Method as claimed in claim 16 or 17, **characterized in that** the method makes provision that the direction of unrolling of the roll of wall covering, given the preferred orientation of the design, is adapted to the operating direction during arranging of the wall covering.

19. Method as claimed in any of the claims 16-18, **characterized in that** the method comprises of arranging on the wall or partition a layer provided with hook and loop fastenings for releasable attachment of the wall covering.

20. Method as claimed in claim 16, **characterized in that** the method comprises of arranging the wall covering on the wall or partition by making use of the adhesive layer with which the first layer of the wall covering according to claim 6 is provided.

## Patentansprüche

1. Multifunktionale Wandabdeckung, welche auf einer Wand oder einer Trennwand angeordnet werden kann, umfassend
einen Materialstreifen, welcher länger ist als seine Breite, zum Anbringen an der Wand oder an der Trennwand, mit zumindest einer ersten Schicht und einer zweiten Schicht, welche mit der ersten Schicht verbunden ist, wobei die erste Schicht aus einem porösen Schall-absorbierenden textilen Material besteht, und wobei die zweite Schicht aus einem luftdurchlässigen textilen Material besteht, und wobei die zweite Schicht mit einem Design versehen ist, **dadurch gekennzeichnet, dass**
der Materialstreifen zumindest 2,2 m breit ist, zumindest 1,5 mm dick ist und maximal 10 mm dick ist.

2. Multifunktionale Wandabdeckung gemäß Anspruch 1, **dadurch gekennzeichnet, dass** die erste Schicht aus einem textilen Vliesmaterial mit akustischen Eigenschaften hergestellt ist, wie beispielsweise ein textiles Material auf der Basis von Polypropylen oder Polyethylen mit niedriger Dichte.

3. Multifunktionale Wandabdeckung gemäß Anspruch 1, **dadurch gekennzeichnet, dass** die erste Schicht aus einem textilen Gewebe- oder Vliesmaterial mit akustischen Eigenschaften hergestellt ist, wie beispielsweise ein gewebter oder thermisch gebundener nicht-gewebter Stoff aus Polypropylen.

4. Multifunktionale Wandabdeckung gemäß Anspruch 1, **dadurch gekennzeichnet, dass** die erste Schicht aus einem Schaumstoffmaterial mit akustischen Eigenschaften, wie beispielsweise Polyurethan, hergestellt ist.

5. Multifunktionale Wandabdeckung gemäß irgendeinem der Ansprüche 1 bis 4, **dadurch gekennzeichnet, dass** die erste Schicht aus einem Stoff mit schwer entflammbaren Eigenschaften aufgrund einer Behandlung mit einer flammhemmenden Substanz hergestellt ist.

6. Multifunktionale Wandabdeckung gemäß irgendeinem der Ansprüche 1 bis 5, **dadurch gekennzeichnet, dass** die erste Schicht mit einer haftenden Schicht zum Anbringen der Wandabdeckung an der Wand oder an der Trennwand versehen ist, wobei die haftende Schicht mit einer Schutzfolie versehen ist.

7. Multifunktionale Wandabdeckung gemäß irgendeinem der Ansprüche 1 bis 6, **dadurch gekennzeichnet, dass** die zweite Schicht aus einem bedruckbaren textilen Material hergestellt ist, wie beispielsweise gewebter Stoff auf einer 100 % Polyesterbasis.

8. Multifunktionale Wandabdeckung gemäß Anspruch 1, **dadurch gekennzeichnet, dass** die zweite Schicht mit einem Design versehen ist, welches durch einen Großformatdrucker oder -Drucksystem hergestellt ist.

9. Multifunktionale Wandabdeckung gemäß irgendeinem der Ansprüche 1 bis 8, **dadurch gekennzeichnet, dass** die zweite Schicht aus einem Stoff mit schwer entflammbaren Eigenschaften aufgrund einer Behandlung mit einer flammhemmenden Substanz hergestellt ist.

10. Multifunktionale Wandabdeckung gemäß Anspruch 1, **dadurch gekennzeichnet, dass** das Design figurative Elemente umfasst, welche räumlich in Bezug auf eine lange Seite orientiert sind.

11. Multifunktionale Wandabdeckung gemäß irgendeinem der Ansprüche 1 bis 10, **dadurch gekennzeichnet, dass** die erste Schicht und die zweite Schicht gegenseitig mit einer Klebeschicht mit schwer entflammbaren Eigenschaften verbunden sind.

12. Multifunktionale Wandabdeckung gemäß irgendeinem der Ansprüche 1 bis 10, **dadurch gekennzeichnet, dass** die Wandabdeckung eine dritte Schicht umfasst, welche zwischen der ersten und der zweiten Schicht angeordnet ist, und welche damit verbunden ist, und welche aus einem textilen Vliesgewebe aus Polypropylen mit einer Dichte von 20 - 100 gf/m² hergestellt ist.

13. Verfahren zum Herstellen einer multifunktionalen Wandabdeckung von dem Typ, wie in irgendeinem der Ansprüche 1 bis 12 beansprucht, **dadurch gekennzeichnet, dass** das Verfahren ein Bereitstellen des Materialstreifens mit einem Design umfasst, unter Verwendung eines bekannten Großformatdruckers oder eines ähnlichen Großformatdrucks ystems.

14. Verfahren gemäß Anspruch 13, **dadurch gekennzeichnet, dass** das Verfahren ein Wickeln des Materialstreifens, welcher mit einem Design durch Großformatdruckertechnik versehen ist, auf eine Rolle umfasst, wobei die Seite, welche mit dem Design versehen ist, nach innen orientiert ist, und wobei es möglich ist, im Voraus auszuwählen, ob der Materialstreifen in Anbetracht der bevorzugten Orientierung des Designs von links nach rechts oder umgekehrt aufgerollt wird.

15. Verfahren gemäß Anspruch 13 oder 14, **dadurch gekennzeichnet, dass** das Verfahren gewährleistet, dass der Materialstreifen, nachdem er mit einem Design versehen worden ist und bevor er auf die Rolle aufgewickelt wird, zumindest einmal in der longitudinalen Richtung gefaltet wird.

16. Verfahren zum Anordnen einer multifunktionalen Wandabdeckung des Typs, welcher in irgendeinem der Ansprüche 1 bis 12 beansprucht wird, auf einer Wand oder auf einer Trennwand, **dadurch gekennzeichnet, dass** eine Wand oder eine Trennwand mit einer Höhe, welche geringer ist als oder gleich ist wie die Breite der Wandabdeckung nahtlos durch die Wandabdeckung abgedeckt wird.

17. Verfahren gemäß Anspruch 16, **dadurch gekennzeichnet, dass** das Verfahren ein Abwickeln der Wandabdeckung in aufgerolltem Zustand entlang der Wand oder der Trennwand umfasst, wobei die Rolle der Wandabdeckung drehbar um eine Drehachse auf einer mobilen Plattform angeordnet wird, welche zu diesem Zweck auf dem Boden entlang der Wand oder der Trennwand bewegt wird.

18. Verfahren gemäß Anspruch 16 oder 17, **dadurch gekennzeichnet, dass** das Verfahren gewährleistet, dass die Richtung des Abwickelns der Wandabdeckung von der Rolle in Anbetracht der bevorzugten Orientierung des Designs angepasst ist an die Arbeitsrichtung während des Anordnens von der Wandabdeckung.

19. Verfahren gemäß irgendeinem der Ansprüche 16 bis 18, **dadurch gekennzeichnet, dass** das Verfahren ein Anordnen einer Schicht auf der Wand oder auf der Trennwand umfasst, welche mit einem Klettverschluss zum lösbaren Anbringen der Wandabdeckung versehen ist.

20. Verfahren gemäß Anspruch 16, **dadurch gekennzeichnet, dass** das Verfahren ein Anordnen der Wandabdeckung auf der Wand oder auf der Trennwand unter Verwendung der haftenden Schicht umfasst, mit welcher die erste Schicht der Wandabdeckung gemäß Anspruch 6 versehen ist.

## Revendications

1. Revêtement mural multifonctionnel pouvant être agencé sur une paroi ou une cloison, comprenant une bande de matériau qui est plus longue que large afin d'assurer la fixation sur ladite paroi ou cloison, avec au moins une première couche et une deuxième couche reliée à la première couche, laquelle première couche consiste en un matériau textile insonorisant et poreux et laquelle deuxième couche consiste en un matériau textile perméable à l'air et laquelle deuxième couche comporte un motif, **caractérisé en ce que** ladite bande de matériau présente une largeur supérieure ou égale à 2,2 m, une épaisseur supérieure ou égale à 1,5 mm et inférieure ou égale à 10 mm d'épaisseur.

2. Revêtement mural multifonctionnel selon la revendication 1, **caractérisé en ce que** la première couche est fabriquée à partir d'un matériau textile non tissé présentant des propriétés acoustiques, tel qu'un matériau textile sur la base de polypropylène ou de polyéthylène à basse densité.

3. Revêtement mural multifonctionnel selon la revendication 1, **caractérisé en ce que** la première couche est fabriquée en un matériau textile tissé ou non tissé présentant des propriétés acoustiques, tel qu'un textile de polypropylène tissé ou non tissé, soudé thermiquement.

4. Revêtement mural multifonctionnel selon la revendication 1, **caractérisé en ce que** la première couche est fabriquée en un matériau sous forme de mousse présentant des propriétés acoustiques tel que du polyuréthanne.

5. Revêtement mural multifonctionnel selon l'une quelconque des revendications 1 à 4, **caractérisé en ce que** la première couche est fabriquée en un textile présentant des propriétés ignifuges compte tenu d'un traitement par une substance ignifuge.

6. Revêtement mural multifonctionnel selon l'une quelconque des revendications 1 à 5, **caractérisé en ce que** ladite première couche comporte une couche adhésive afin de fixer le revêtement mural sur une paroi ou cloison, laquelle couche adhésive comporte une couche de protection.

7. Revêtement mural multifonctionnel selon l'une quelconque des revendications 1 à 6, **caractérisé en ce que** la deuxième couche est fabriquée à partir d'un matériau textile pouvant être imprimé, tel qu'un textile tissé sur une base de polyester à 100%.

8. Revêtement mural multifonctionnel selon la revendication 1, **caractérisé en ce que** la deuxième couche présente un motif produit par une imprimante ou un dispositif d'impression en grand format.

9. Revêtement mural multifonctionnel selon l'une quelconque des revendications 1 à 8, **caractérisé en ce que** la deuxième couche est fabriquée en un textile présentant des propriétés ignifuge compte tenu d'un traitement par une substance ignifuge.

10. Revêtement mural multifonctionnel selon la revendication 1, **caractérisé en ce que** le motif comprend des éléments figuratifs qui sont orientés dans l'espace par rapport à un côté longitudinal.

11. Revêtement mural multifonctionnel selon l'une quelconque des revendications 1 à 10, **caractérisé en ce que** la première couche et la deuxième couche sont reliées entre elles avec une couche de colle présentant des propriétés ignifuges.

12. Revêtement mural multifonctionnel selon l'une quelconque des revendications 1 à 10, **caractérisé en ce que** le revêtement mural comprend une troisième couche qui est située entre la première et la deuxième couche et qui est reliée à celles-ci et qui est fabriquée en un tissu textile de polypropylène non tissé présentant une densité de 20 à 100 g/m2.

13. Procédé de fabrication d'un revêtement mural multifonctionnel du type selon l'une quelconque des revendications 1 à 12, **caractérisé en ce que** le procédé comprend la formation, sur la bande de matériau, d'un motif en utilisant une imprimante à grand format ou un dispositif d'impression en grand format similaire connu.

14. Procédé selon la revendication 13, **caractérisé en ce que** le procédé comprend l'enroulement de la bande de matériau sur laquelle est formé un motif par le procédé d'impression en grand format sur un rouleau, dans lequel la face présentant un motif est orientée vers l'intérieur et dans lequel il est possible de présélectionner le fait que la bande de matériau, suivant l'orientation préférée du motif, est enroulée de gauche à droite ou l'inverse.

15. Procédé selon la revendication 13 ou 14, **caractérisé en ce que** le procédé prévoit que la bande de matériau, après qu'un motif a été formé et avant d'être enroulée sur un rouleau, est pliée au moins une fois suivant la direction longitudinale.

16. Procédé d'agencement d'un revêtement mural multifonctionnel du type selon l'une quelconque des revendications 1 à 12 sur une paroi ou cloison, **caractérisé en ce qu'**une paroi ou cloison avec une hauteur inférieure ou identique à la largeur du revêtement mural est recouverte sans raccord par le revêtement mural.

17. Procédé selon la revendication 16, **caractérisé en ce que** le procédé comprend le déroulement du revêtement mural dans l'état enroulé le long de la paroi ou cloison, dans lequel le rouleau de revêtement mural est placé de manière à tourner autour d'un axe de rotation sur une plate-forme mobile qui est déplacée dans ce but sur le sol, le long de la paroi ou cloison.

18. Procédé selon la revendication 16 ou 17, **caractérisé en ce que** le procédé prévoit que la direction de déroulement du rouleau de revêtement mural, compte tenu de l'orientation préférée du motif, est adaptée à la direction d'utilisation au cours de l'agencement du revêtement mural.

19. Procédé selon l'une quelconque des revendications 16 à 18, **caractérisé en ce que** le procédé comprend l'agencement sur la paroi ou cloison d'une couche comportant des dispositifs de fixation à crochet et boucle afin d'assurer une fixation amovible du revêtement mural.

20. Procédé selon la revendication 16, **caractérisé en ce que** le procédé comprend l'agencement du revêtement mural sur la paroi ou cloison en utilisant la couche adhésive formée sur la première couche du revêtement mural selon la revendication 6.
